# EUROPEAN PATENT APPLICATION

(11) **EP 4 841 680 A1**
(43) Date of publication of application: **18.11.2026**
(21) Application number: 25211509.2
(22) Date of filing: 27.10.2025
(51) Int. Cl.: H01M 4/04, B65G 1/04, B65G 65/00, H01M 10/04, H01M 10/058, H01M 10/42, H01M 10/44, H01M 50/105

(54) **BATTERY CELL TRANSPORT SYSTEM DESIGNED TO MINIMIZE DAMAGE TO COMPONENTS**

(30) Priority: 14.05.2025 KR 20250062336; 30.07.2025 KR 20250104265
(71) Applicant: Apro Co., Ltd, Anyang-si, Gyeonggi-do 14055 (KR)
(72) Inventor: LIM, Jong Hyun, 14055 Gyeonggi-do (KR); CHOI, Yong Cheol, 14055 Gyeonggi-do (KR); JUNG, Young Suk, 14055 Gyeonggi-do (KR); PARK, Jung Bae, 14055 Gyeonggi-do (KR); PARK, Sung Hoon, 14055 Gyeonggi-do (KR)
(74) Representative: Sander, Rolf

(57) **Abstract**

Disclosed herein is a battery cell transport system capable of minimizing damage to components. The battery cell transport system includes a battery cell transport apparatus configured to transport a battery cell from a configuration to another configuration, and a housing configured to support the battery cell transport apparatus and allow the battery cell transport apparatus to move along the housing. The housing includes main frames configured to form a framework of the housing and provide a space in which configurations in the housing are provided, reinforcement frames disposed between the respective adjacent main frames and configured to disperse a force applied to the main frames, and a main rail seated on the reinforcement frames in a first axis direction perpendicular to a vertical direction, and configured to allow the battery cell transport apparatus to move along the main rail.

## Description

### CROSS-REFERENCE TO RELATED APPLICATIONS

This application claims priority to Korean Patent Application No. 10-2025-0062336, filed on May 14, 2025, and Korean Patent Application No. 10-2025-0104265, filed on July 30, 2025, the entire contents of which are herein incorporated by reference.

### BACKGROUND

### 1. Technical Field

Embodiments of the present disclosure relate to a battery cell transport system designed to minimize damage to components.

### 2. Related Art

Contents described in this section merely provide background information related to embodiments of the present disclosure, and are not intended to configure a related art.

In general, secondary batteries are rechargeable and may have a large capacity, and representative examples thereof include nickel-cadmium batteries, nickel-metal hydride batteries, and lithium-ion batteries. Secondary batteries may be manufactured in a pouch type having flexibility, in which case the secondary batteries have an advantage of a relative shape flexibility.

Secondary batteries include a pouch and a battery cell. Such a secondary battery is provided with a cell pouch in which the battery cell is accommodated, and has a structure in which a polymer exterior material serving as the pouch encloses the battery cell.

Since the cell is assembled in a discharged state, the cell can function as a battery only after being activated by performing a primary charging after the cell is assembled. During an activation process, to enable smooth current conduction, the cell is mounted on a predetermined activation apparatus, and a process such as charging or discharging is performed under conditions required for activation.

The manufactured secondary battery cell is transported to the activation apparatus and seated in the activation apparatus. Thereafter, an activation process is performed. In order to transport the secondary battery cell to the activation apparatus for activation, or to transport the activated secondary battery cell again to a separate configuration after completion of activation, a battery cell transport apparatus is used. As such, the battery cell transport apparatus grips the secondary battery cell and transports the secondary battery cell from one configuration to another configuration.

A conventional battery cell transport apparatus is coupled to a shaft implemented along one axial direction with a component such as a bushing and moved along the shaft. In order to activate a large number of secondary battery cells collectively, a considerable number of activation apparatuses or the like are arranged, and thus a transport distance becomes relatively long. Accordingly, the shaft is also increased in length, and may be implemented by coupling a plurality of shaft parts to each other. As a result, a manufacturing tolerance occurs in a process in which respective shaft parts are coupled together. Since it is substantially impossible to manufacture a shaft having a considerable length as an integral piece, the shaft inevitably has a manufacturing tolerance. In the case where the number of transfers of the battery cell transport apparatus along the shaft having a manufacturing tolerance increases, damage occurs at a portion of the battery cell transport apparatus that is coupled to the shaft. Movement of the conventional battery cell transport apparatus along the shaft having a manufacturing tolerance inevitably causes damage to a component coupled to the shaft, resulting in an inconvenience.

### SUMMARY

An embodiment of the present disclosure is directed to providing a battery cell transport system configured to minimize damage to components that may occur during transport of battery cells, regardless of the number of transports or a transport distance of the battery cells.

A battery cell transport system according to an aspect of the present disclosure may include a battery cell transport apparatus configured to transport a battery cell from a configuration to another configuration, and a housing configured to support the battery cell transport apparatus and allow the battery cell transport apparatus to move along the housing. The housing may include main frames configured to form a framework of the housing and provide a space in which configurations in the housing are provided, reinforcement frames disposed between the respective adjacent main frames and configured to disperse a force applied to the main frames, and a main rail seated on the reinforcement frames in a first axis direction perpendicular to a vertical direction , and configured to allow the battery cell transport apparatus to move along the main rail.

According to an aspect of the present disclosure, the battery cell transport apparatus may move along the housing in the first axis direction by moving along the main rail using a wheel.

According to an aspect of the present disclosure, the main frames may be disposed along the first axis direction and a second axis direction corresponding to the vertical direction, and form an outer framework.

According to an aspect of the present disclosure, each of the main frames may be formed of an aluminum profile.

According to an aspect of the present disclosure, each of the main frames has a cross-sectional size of 80 mm x 120 mm in terms of width and height with a tolerance of 10 mm.

According to an aspect of the present disclosure, the reinforcement frames may be disposed between the respective adjacent main frames in a third axis direction perpendicular to the vertical direction.

According to an aspect of the present disclosure, each of the reinforcement frames may be formed of an aluminum profile.

According to an aspect of the present disclosure, the battery cell transport system may further include support frames connecting the main frames, and the reinforcement frames on which the main rail is seated, the support frames being configured to disperse a weight applied to the reinforcement frames.

According to an aspect of the present disclosure, the support frames may connect the main frames and the reinforcement frames in a diagonal form.

According to an aspect of the present disclosure, the main rail may have a planar cross section having at least four sides at an outer periphery thereof.

### BRIEF DESCRIPTION OF THE DRAWINGS

FIG. 1 is a view illustrating a configuration of a battery cell transport system according to an embodiment of the present disclosure.
FIG. 2 is a view illustrating a configuration of a housing according to an embodiment of the present disclosure.
FIG. 3 is a view illustrating a configuration of a battery cell transport apparatus according to an embodiment of the present disclosure.
FIGS. 4A and 4B are views illustrating a configuration of a first axis moving module according to an embodiment of the present disclosure.
FIG. 5 is a view illustrating a configuration of a first axis driving module according to an embodiment of the present disclosure.
FIGS. 6A and 6B are views illustrating a configuration of a second axis moving module according to an embodiment of the present disclosure.
FIG. 7 is a view illustrating a configuration of a third axis moving module according to an embodiment of the present disclosure.
FIGS. 8A to 8C are views illustrating a configuration of a cell gripper according to an embodiment of the present disclosure.
FIG. 9 is a view illustrating a configuration of a drop prevention cover module according to an embodiment of the present disclosure.

### Detailed description

The present disclosure may be modified in various forms and may have various embodiments, and specific embodiments thereof are shown by way of example in the drawings and described in detail. However, it should be understood that the description is not intended to limit the present disclosure to the specific embodiments, but, on the contrary, the present disclosure is to cover all modifications, equivalents, and alternatives that fall within the spirit and scope of the present disclosure. Like reference numerals are used to designate like elements throughout the drawings.

Although the terms "first," "second,", "A", "B", etc. may be used herein in reference to various elements, such elements should not be construed as limited by these terms. These terms are only used to distinguish one element from another. For example, a first element could be termed a second element, and a second element could be termed a first element, without departing from the scope of the present invention. The term "and/or" includes any and all combinations of one or more of the associated listed items.

It should be understood that when an element is referred to as being "connected" or "coupled" to another element, it can be directly connected or coupled to the other element or intervening elements may be present. In contrast, when an element is referred to as being "directly connected" or "directed coupled" to another element, there is no intervening element.

Terms used in the present specification are used only to describe specific embodiments, and are not intended to limit the present disclosure. A singular form may include a plural form if there is no clearly opposite meaning in the context. In this specification, it should be understood that the term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless otherwise defined, all terms including technical and scientific terms used herein have the same meaning as commonly understood by those of ordinary skill in the art to which the present disclosure pertains.

It will be further understood that terms defined in commonly used dictionaries should be interpreted as having a meaning that is consistent with their meaning in the context of the related art and will not be interpreted in an idealized or overly formal sense unless expressly so defined herein.

The configurations, processes, steps, or methods according to embodiments of the present disclosure may be shared as long as they do not technically conflict with each other.

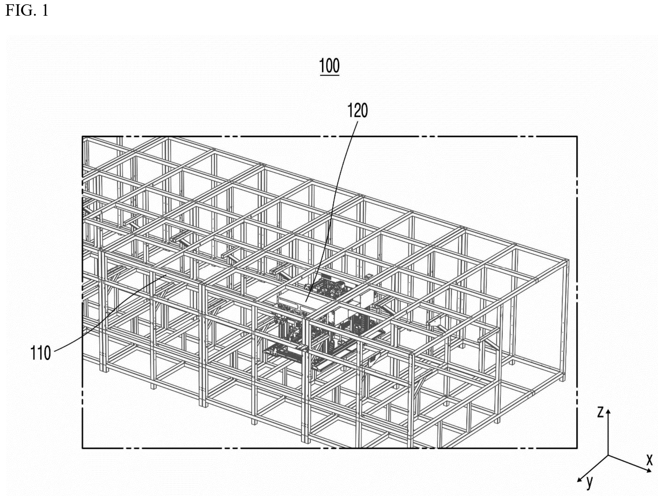

FIG. 1 is a view illustrating a configuration of a battery cell transport system according to an embodiment of the present disclosure.

Referring to FIG. 1, a battery cell transport system 100 according to an embodiment of the present disclosure includes a housing 110 and a battery cell transport apparatus 120.

The battery cell transport system 100 grips battery cells (which require activation or the like) in a tray, which are transported to the battery cell transport system 100, and transports the battery cells to an activation apparatus or the like. The battery cell transport system 100 also grips battery cells for which activation or the like has been completed, and transports the battery cells to the tray or other configurations.

The housing 110 supports the battery cell transport apparatus 120 and provides a rail to allow the battery cell transport apparatus 120 to move.

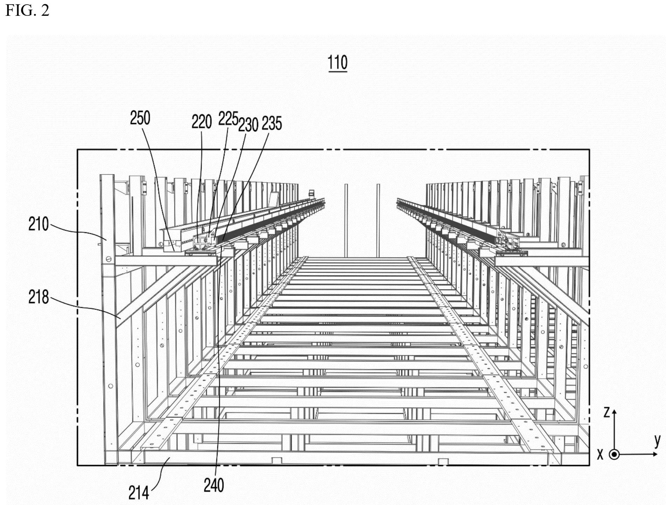

The housing 110 supports the weight of the battery cell transport apparatus 120 that moves along the housing 110 or is stationary. In particular, as the housing 110 is implemented with components to be described later with reference to FIG. 2, the housing 110 may fully support the weight of the battery cell transport apparatus 120 that is in a moving or stationary state. Accordingly, the housing 110 may minimize structural deformation due to the weight and prevent damage to components in the battery cell transport apparatus 120.

The housing 110 includes a rail formed along a first axis (a direction perpendicular to a vertical direction, which is exemplified as an x-axis in FIG. 1) to allow the battery cell transport apparatus 120 to transport battery cells from one configuration to another configuration. Including the rail, the housing 110 allows the battery cell transport apparatus 120 to move in the first axis direction along the rail. A detailed structure of the housing 110 will be described below with reference to FIG. 2.

The battery cell transport apparatus 120 moves along the housing 110 within the housing 110 and grips battery cells to transport the battery cells from one configuration to another configuration. The battery cell transport apparatus 120 grips the battery cells to be activated and transports the gripped battery cell from one configuration to another configuration along the housing 110 (along the first axis). The battery cell transport apparatus 120 moves along a second axis (a vertical direction, which is exemplified as a z-axis in FIG. 1) to grip or place the battery cells by using a cell gripper to be described later, and accurately adjusts a position of the cell gripper along a third axis (an axis perpendicular to the first axis and the second axis, which is exemplified as a y-axis in FIG. 1) to grip the battery cells or place the battery cells at a correct position.

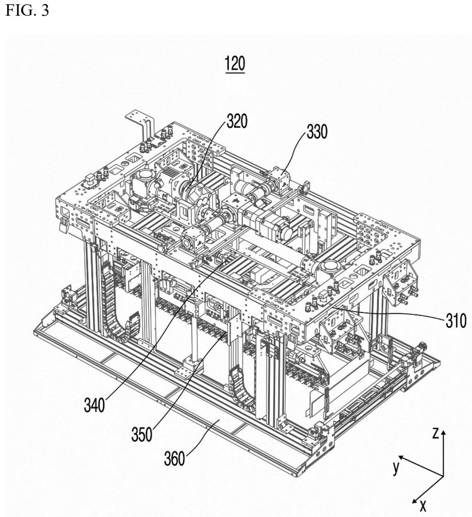

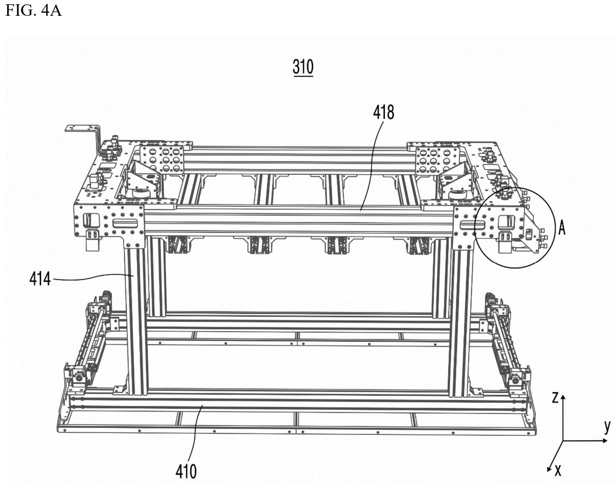

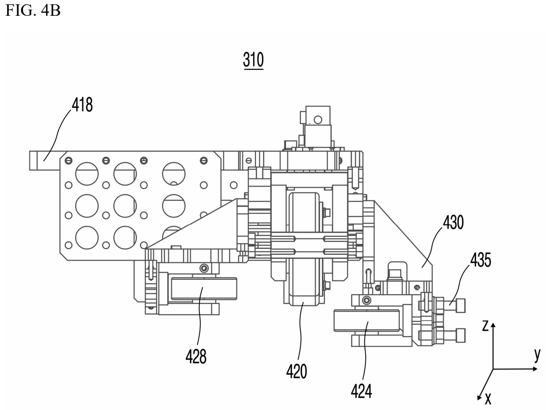

In moving in the first axis direction along the housing 110, the battery cell transport apparatus 120 uses wheels to be described later with reference to FIG. 4, to move along the housing 110, and more specifically along the rail. Since the battery cell transport apparatus 120 moves along the rail of the housing 110 by using the wheels, even when a manufacturing tolerance occurs in the rail, damage to components in the battery cell transport apparatus 120 due to the manufacturing tolerance may be minimized. A detailed configuration of the battery cell transport apparatus 120 will be described later with reference to FIGS. 3 to 9.

FIG. 2 is a view illustrating a configuration of the housing according to an embodiment of the present disclosure.

Referring to FIG. 2, the housing 110 according to an embodiment of the present disclosure includes main frames 210, reinforcement frames 214, support frames 218, main rails 220, auxiliary rails 225, racks 230, rack gears 235, foreign material receivers 240, and a receiving groove 250.

The main frames 210 form a framework of the housing 110 and provide a space in which each configuration in the housing 110 is provided. Each of the main frames 210 is formed of a structure which is disposed mainly along the first axis or the second axis to form an outer framework. The structure may be formed of an aluminum profile having a cross-sectional size of 80 mm x 120 mm in terms of width and height with a tolerance of 10 mm. As the structure is formed with the above-described material and size, the housing 110 may support the weight of the apparatus and maintain the shape thereof even when the battery cell transport apparatus 120 is seated and moved in the housing 110.

The reinforcement frames 214 are disposed along a third axis between the respective adjacent main frames 210, thereby dispersing a force applied to the main frames 210. Each of the reinforcement frames 214 is also formed of the same structure as the main frames 210 and is disposed as described above.

The support frames 218 connect the reinforcement frames 214, particularly the reinforcement frames 214 on which the main rails 220 and the like are seated, and the main frames 210, thereby dispersing the weight of the battery cell transport apparatus 120 directly applied to the above-described reinforcement frames 214. The support frames 218 may connect the reinforcement frames 214 on which the main rails 220 and the like are seated and the main frame 210 in a diagonal form. Each of the support frames 218 is also formed of the same structure as the main frames 210. Accordingly, the support frames 218 may minimize damage or deformation of the corresponding reinforcement frames 214.

The main rails 220 are seated in the first axis direction on the reinforcement frames 214 positioned at a predefined height along the second axis, thereby allowing the battery cell transport apparatus 120 to move along the main rails 220. The main rails 220 are seated in the first axis direction on the reinforcement frames 214 at a predefined height along the second axis, and more specifically, at a position higher along the second axis than a height at which the battery cell transport apparatus 120 grips battery cells. Each of the main rails 220 has a cross section with at least four outermost surfaces, each of which is planar. Accordingly, the main rail 220 includes at least three of the outermost surfaces excluding a surface seated on the reinforcement frames 214, and the battery cell transport apparatus 120 may move along the corresponding surfaces in the first axis direction.

Each of the auxiliary rails 225 is coupled to one surface (i.e., one outermost surface) of the corresponding main rail 220 to adjust a position of a surface with which the battery cell transport apparatus 120 (more specifically, the wheels to be described later) is to contact. The battery cell transport apparatus 120 may contact three surfaces of the main rail 220 and move in the first axis direction along the main rail 220. However, depending on a structure of the housing 110 or positions or structures of the components of the battery cell transport apparatus 120, there may be a case where the battery cell transport apparatus 120 does not fully contact all of the three surfaces of the main rail 220. The auxiliary rail 225 is coupled to one surface (i.e., one outermost surface) of the main rail 220 to adjust a position of the surface to be brought into contact with the battery cell transport apparatus 120. As illustrated in FIG. 2, the auxiliary rail 225 is coupled to an inner surface (in a direction close to a center of the main frame) of the main rail 220, thereby achieving an effect of moving the inner position of the main rail 220 further inward and further upward. Since the auxiliary rail 225 comes into contact with the battery cell transport apparatus 120 in a state in which the auxiliary rail 225 is coupled to one surface of the main rail 220, an effect similar to that in which the battery cell transport apparatus 120 moves along one surface of the main rail 220 may be achieved.

Each of the racks 230 is disposed at a position capable of supporting the corresponding auxiliary rail 225 according to a shape of the auxiliary rail 225 and a position at which the auxiliary rail 225 is coupled to the main rail 220, thereby supporting the auxiliary rail 225. In most cases, the rack 230 is disposed at a lower end (along the second axis) of the auxiliary rail 225 to support the auxiliary rail 225 and prevent displacement or deformation of the auxiliary rail 225.

The rack gears 235 are provided in the respective racks 230, on facing surfaces between the racks 230, and are positioned such that the racks 230 do not contact the auxiliary rails 225 or other components. Each of the rack gears 235 is coupled to a gear 560 in a first axis driving module 320 to be described later. Each of the rack gears 235 is formed in a gear shape and is coupled to the gear 560 in the first axis driving module 320 to be described later, thereby allowing the gear 560 to move along the rack gear 235.

Each of the foreign material receivers 240 has a structure protruding from the reinforcement frame 214 inward (in a direction close to the center of the main frame), and prevents foreign material from falling onto a battery cell from above. The foreign material receiver 240 is formed in the above-described structure to prevent foreign material or the like from falling from above the battery cell onto the battery cell, thereby preventing damage to the battery cell.

The receiving groove 250 is provided on a side surface of one of the main rails 220 and, more specifically, adjacent to an outer side (in a direction away from the center of the main frame). The receiving groove 250 receives essential elements, such as cables, required for operation of the respective components.

The receiving groove 250 is provided on a side surface of one of the main rails 220, and more specifically, on a side surface of the main rail 220 positioned at a side on which a support 430 is not provided in the first axis moving module 310, to be described later. The receiving groove 250 is provided at the corresponding position so that the above-described operation can be performed without structural interference with the first axis moving module 310.

The housing 110, by including the above-described components, ensures stability and moves the battery cell transport apparatus 120 only in the first axis direction.

FIG. 3 is a view illustrating a configuration of the battery cell transport apparatus according to an embodiment of the present disclosure.

Referring to FIG. 3, a battery cell transport apparatus 120 according to embodiments of the present disclosure includes the first axis moving module 310, the first axis driving module 320, a second axis moving module 330, a third axis moving module 340, a cell gripper 350, a drop prevention cover module 360, and a controller (not shown).

The first axis moving module 310 is mounted on the housing 110 and moves the battery cell transport apparatus 120 along the first axis on the rails 220 and 225 in the housing 110. The first axis moving module 310 moves along the first axis on the rails 220 and 225, and may structurally minimize damage caused by a manufacturing tolerance on the rails 220 and 225. A detailed structure of the first axis moving module 310 will be described later with reference to FIG. 4.

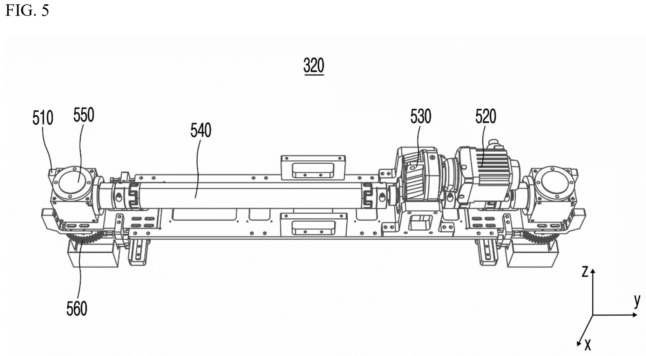

The first axis driving module 320 is provided in the first axis moving module 310 and supplies power to enable the first axis moving module 310 to move the battery cell transport apparatus 120 along the first axis. A detailed structure of the first axis driving module 320 will be described later with reference to FIG. 5.

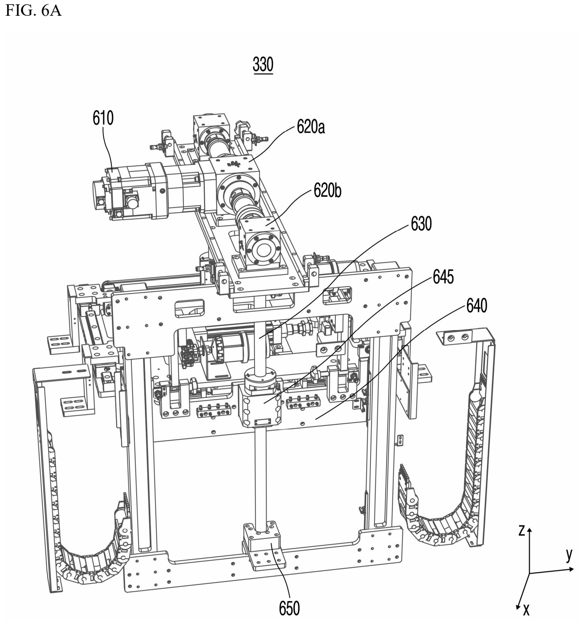

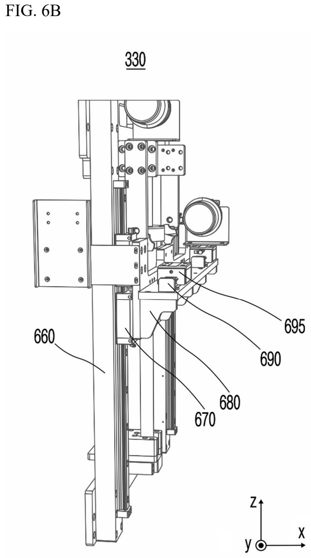

The second axis moving module 330 is structurally coupled to the third axis moving module 340 and the cell gripper 350, and moves the two components 340 and 350 along the second axis. The second axis moving module 330 is structurally connected to the first axis moving module 310 and moves along the first axis together with the first axis moving module 310. Along with the foregoing, the second axis moving module 330 moves the two components 340 and 350 connected thereto along the second axis, adjusts the position of the cell gripper 350 to enable the cell gripper 350 to grip or place a battery cell, and allows a gripped battery cell to be moved to another position. A detailed structure of the second axis moving module 330 will be described later with reference to FIG. 6.

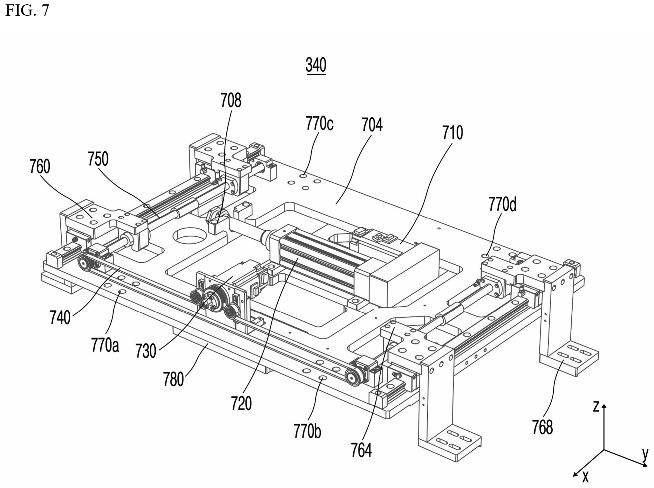

The third axis moving module 340 is structurally coupled to the second axis moving module 330 and the cell gripper 350, and moves the cell gripper 350 along the third axis and the first axis. The third axis moving module 340 moves the cell gripper 350 coupled thereto along the third axis and adjusts the cell gripper 350 to enable the cell gripper 350 to fully grip a battery cell or place the battery cell at a correct position. For example, the third axis moving module 340 may move cell grippers 350 along the first axis and adjust the positions of the cell grippers 350. The third axis moving module 340 moves the cell grippers 350 along the first axis and allows the cell grippers 350 to accurately grip battery cells or place the battery cells at accurate positions. The third axis moving module 340 is provided in the same number as the cell grippers 350 (two or more) so as to adjust the cell grippers 350 as described above. A detailed structure of the third axis driving module 340 will be described later with reference to FIG. 7.

Each of the cell grippers 350 grips a battery cell. The cell gripper 350 is coupled to the third axis moving module 340, is adjusted in position by the first to third axis moving modules 310, 330, and 340, and grips a battery cell at an adjusted position or places the gripped battery cell.

The cell grippers 350 are coupled to the third axis moving module 340 and are implemented in two or more in number so as to stably grip a battery cell from opposite sides. The cell grippers 350 are coupled to the third axis moving module 340 at opposite ends (opposite distal ends) along the first axis and may grip opposite ends of the battery cell. Accordingly, the cell grippers 350 stably grip the battery cell.

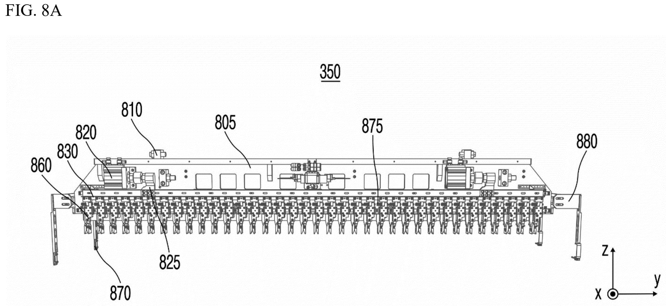

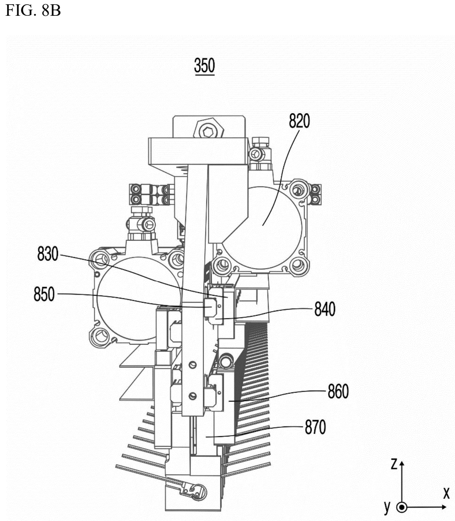

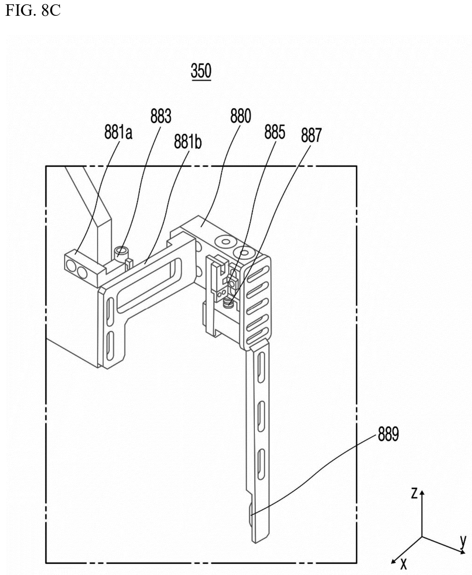

Each of the cell grippers 350 includes an embedded sensor and may sense whether a collision with another component has occurred during a process of placing a gripped battery cell or whether a battery cell has been fully gripped in a process of gripping the battery cell. A detailed structure of the cell gripper 350 will be described later with reference to FIG. 8.

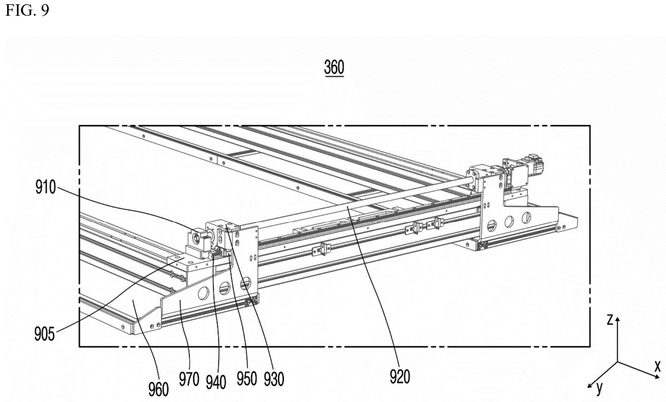

The drop prevention cover module 360 prevents a battery cell gripped by the cell gripper 350 from falling outside the housing 110. Even when the cell gripper 350 grips a battery cell, an unintended drop of the battery cell may occur. When the battery cell falls outside the housing 110 from a position where the cell gripper 350 grips the battery cell, the fall of the battery cell may not only cause damage to the battery cell but also result in a dangerous situation such as a fire. When the cell gripper 350 grips a battery cell or attempts to place a gripped battery cell, the drop prevention cover module 360 moves to a position away from a lower end of the cell gripper 350 so that the cell gripper 350 may perform the above-described operation. On the other hand, after the cell gripper 350 grips a battery cell, the drop prevention cover module 360 is positioned at the lower end of the cell gripper 350 to prevent the battery cell from falling outside the housing 110. The drop prevention cover module 360 may minimize damage to a battery cell that falls downward and may prevent a fire hazard that may occur when the battery cell falls outside the housing 110. A detailed structure of the drop prevention cover module 360 will be described later with reference to FIG. 9.

The controller (not shown) controls the components 310 to 360 described above to perform the aforementioned operations.

FIGS. 4A and 4B are views illustrating a configuration of the first axis moving module according to an embodiment of the present disclosure.

Referring to FIGS. 4A and 4B, the first axis moving module 310 according to an embodiment of the present disclosure includes a lower frame 410, columns 414, an upper frame 418, wheels 420, 424, and 428, a support 430, and a gap adjuster 435. FIG. 4B is an enlarged view of portion A of FIG. 4A.

The lower frame 410 provides a space in which the columns 414 may be disposed.

The columns 414 are disposed between the opposite frames 410 and 418 so that the upper frame 418 may be positioned at a constant height.

The upper frame 418 provides a space in which the wheels 420, 424, and 428 and the support 430 in the first axis moving module 310 may be implemented, and provides a space for coupling with the second axis moving module 330.

The wheels 420 are provided to protrude downward along the second axis from respective opposite ends of the upper frame 418, and each contacts a first surface of the corresponding main rail 220 in the housing 110.

The wheels 420 are provided in plural at each of the opposite ends of the upper frame 418 and are each configured to be rotatable, including a shaft, a wheel, a bearing, and an elastic portion. The elastic portion in the wheel 420 that contacts the first surface of the main rail 220 may be formed of a material having elasticity, such as urethane or rubber, and may further include an additive therein to enhance hardness.

The wheel 420 is provided to protrude downward along the second axis and contacts the first surface of the corresponding main rail 220 in the housing 110. More specifically, the wheel 420 contacts the first surface of the main rail 220 opposite to the surface (outermost surface) of the main rail 220 seated on the reinforcement frames 214 and moves along the first surface.

The wheel 424 is provided to protrude inward (toward the center of the housing 110) from an outer side in the third axis direction at one position of the support 430, and contacts a second surface of the main rail 220 in the housing 110. The wheel 424 is provided in plural at one position of the support 430 and each is configured to be rotatable, including a shaft, a wheel, a bearing, and an elastic portion. Each of the wheels 424 has a structure protruding from the outer side toward the inside in the third axis direction at one position of the support 430.

The wheel 428 is provided on each of the opposite ends of the upper frame 418 in a direction protruding from an inner side (the center of the housing 110) toward the outer side along the third axis direction, and contacts a third surface (a surface opposite to the second surface) of the main rail 220 in the housing 110. The wheel 428 is provided in plural at different positions of each of the opposite ends of the upper frame 418 and each is configured to be rotatable, including a shaft, a wheel, a bearing, and an elastic element.

Although the wheels 428 may be provided on opposite sides of the upper frame 418 as described above, the wheels 424 are provided on one side. The first axis moving module 310 moves along the main rails 220 in the housing 110, and, as described above, the receiving groove 250 is formed on a side surface of one main rail 220. Accordingly, the wheels 424 located at one position of the support 430 are provided only on one side where the receiving groove 250 is not located.

The support 430 is provided on one of the opposite ends of the upper frame 418, provides a space in which the wheels 424 are located, and supports the wheels 424. The support 430 is provided on the one end of the upper frame 418 (more specifically, on the end opposite to the main rail 220 in which the receiving groove 250 is formed), in a form protruding from the upper frame 418 outward in the third axis direction. The support 430 is provided in the aforementioned form to provide a space in which the wheels 424 may be located and to support the wheels 424.

The gap adjuster 435 is provided in one or more in number in the support 430 and adjusts a contact area between the wheels 424 and the main rail 220. The one or more gap adjusters 435 are provided in the support 430 on one side of the wheels 424 to contact the wheels 424 and finely adjust the positions of the wheels 424. Each of the gap adjusters 435 is implemented with an element movable by an external force, for example, a bolt, and moves in response to the external force to adjust the positions of the wheels 424. The wheels 424 move in response to adjustment of the gap adjusters 435, whereby a contact area between each wheel 424 and the main rail 220 may change.

The first axis moving module 310 includes the wheels 420, 424, and 428 and may thus minimize damage to components occurring during movement along the main rail 220 and/or the auxiliary rail 225. The battery cell transport apparatus 120 includes the moving modules with respect to the respective axes to move respective components along the respective axes, but the length of the main rails 220 in the housing 110 is formed to be significantly longer than lengths of the components in the battery cell transport apparatus 120 that move along the respective axes. Accordingly, a manufacturing tolerance of the main rail 220 and/or the auxiliary rail 225 disposed along the first axis is inevitably relatively greater than those of other components, and thus component damage has frequently occurred in the first axis moving module that moves along the first axis. However, in the present disclosure, such component damage may be minimized because the first axis moving module 310 includes the above-described configuration.

FIG. 5 is a view illustrating a configuration of the first axis driving module according to an embodiment of the present disclosure.

Referring to FIG. 5, the first axis driving module 320 according to an embodiment of the present disclosure includes a coupling element 510, a motor 520, a reducer 530, a connector 540, gear boxes 550, and gears 560.

The coupling element 510 is physically coupled to the upper frame 418 in the first axis moving module 310, thereby coupling the first axis driving module 320 to the first axis moving module 310.

The motor 520 supplies power to the gears 560. The motor 520 generates power and supplies the power to the gears 560 so that, as will be described later, the gears 560 may move along the respective rack gears 235. The motor 520 supplies power to enable the first axis moving module 310 to move in the first axis direction along the main rail 220 and/or the auxiliary rail 225.

The reducer 530 operates together with the motor 520 and adjusts power generated by the motor 520. By including the reducer 530, the first axis driving module 320 improves torque and resolves problems (including structural complexity, noise and dust generation, and impact or damage problems due to mechanical issues) occurring when transmitting the power generated from the motor 520 to the gears 560 through structural elements such as gears as in the related art.

The connector 540 connects the gear boxes 550 to each other and transmits power generated by the motor 520 and transmitted via the reducer 530, to the gear boxes 550 and the gears 560. The connector 540 is disposed in the third axis direction, connects the gear boxes 550 to each other, and transmits the power to the gear boxes 550.

The gear boxes 550 are coupled to respective opposite ends of the connector 540 and transmit power delivered from the connector 540 to the gears 560.

The gears 560 engage with the respective rack gears 235 provided in the housing 110, receive power transmitted thereto, and move along the rack gears 235. The gears 560 receive power transmitted through the gear boxes 550 and move along the rack gears 235. As the gears 560 receive the power and move, the first axis driving module 320 moves, and consequently, the first axis moving module 310 also moves together.

FIGS. 6A and 6B are views illustrating a configuration of the second axis moving module according to an embodiment of the present disclosure.

Referring to FIGS. 6A and 6B, the second axis moving module 330 according to an embodiment of the present disclosure includes a motor 610, a reducer 620, power transmitting elements 630, bodies 640, stoppers 650, first guide elements 660, first guide blocks 670, module support bodies 680, rails 690, and second guide blocks 695. FIG. 6B is a view showing a side surface of the second axis moving module 330 (viewed in a -y-axis direction).

The motor 610 generates power to enable the body 640 to move upward and downward along the second axis and transmits the generated power to the power transmitting element 630.

The reducer 620 operates together with the motor 610 and adjusts power generated by the motor 610. The reducer 620 may be provided in one or more in number to adjust the power and may resolve the above-described problem. A reducer 620a adjusts power transmitted from the motor 610. Reducers 620b are located on opposite sides of the motor 610 or the reducer 620a along the first axis, adjust power transmitted from the reducer 620a, and transmit the power to the power transmitting element 630.

The power transmitting elements 630 are coupled to the respective reducers 620b and each rotates by receiving power from the corresponding reducer 620b. The power transmitting element 630 is implemented with a rotatable element such as a ball screw and rotates by receiving the power.

The bodies 640 move upward and downward along the second axis according to rotational force generated by the power transmitting elements 630. Each of the bodies 640 includes a coupling portion 645 that is implemented as a ball nut or the like and coupled to the corresponding power transmitting element 630, and moves upward and downward along the corresponding power transmitting element 630. The body 640 is coupled to the power transmitting element 630 through the coupling portion 645 and receives the rotational force generated from the power transmitting element 630 to move upward and downward along the second axis.

Each of the stoppers 650 is disposed at a lowermost end of the corresponding power transmitting element 630 with respect to the second axis and prevents the body 640 from entering a lowermost end along the second axis. The stopper 650 is formed of a material having elasticity to alleviate impact and is disposed at the lowermost end of the power transmitting element 630 with respect to the second axis. While the body 640 may move upward and downward in the second axis direction along the power transmitting element 630, an unintended collision with the lowermost end of the power transmitting element 630 along the second axis may occur. In such a case, damage may occur to the body 640 or other components. The stopper 650 is disposed at the above-described position to prevent the body 640 from entering the lowermost end along the second axis and to alleviate impact, thereby preventing damage to the above-described components.

The first guide elements 660 are disposed parallel to each of the power transmitting elements 630 with respect to the third axis and move the corresponding body 640 upward and downward in the second axis direction. The first guide elements 660 are disposed at the above-described positions and oriented in the second axis direction so that the body 640, which receives rotational force from the power transmitting element 630, may move upward and downward in the second axis direction along the first guide elements 660. The first guide elements 660 may be disposed on opposite sides of the power transmitting element 630 in the third axis direction, or may be provided in a greater number.

The first guide blocks 670 are provided in each of the bodies 640, are coupled to the respective first guide elements 660, and move along the first guide elements 660. Each of the first guide blocks 670 is located on a surface of the body 640 facing the corresponding first guide element 660 and is coupled to the first guide element 660. When the body 640 receives rotational force from the power transmitting element 630, the first guide blocks 670 may move the body 640 upward or downward in the second axis direction along the first guide elements 660.

Each of the module support bodies 680 is provided in the corresponding body 640 and supports the corresponding rail 690 and the third axis moving module 340 coupled to the rail 690. The module support body 680 is located on a surface of the body 640 that is opposite to the surface of the body 640 facing the first guide element 660, and provides a space in which the rail 690 is disposed. The module support body 680 supports the rail 690 disposed thereon and also supports the third axis moving module 340 coupled to the rail 690.

Each of the rails 690 is disposed on the corresponding module support body 680 and oriented in the third axis, and allows the corresponding second guide block 695 to move along the rail 690 in the third axis direction. Since a movable distance of the third axis moving module 340 along the third axis is relatively shorter than that of the first axis moving module 310, the rail 690 is configured to be considerably shorter than the main rail 220 or the auxiliary rail 225. Accordingly, the rail 690 may be disposed on the module support body 680 without difficulty. The rail 690 is disposed on the module support body 680 such that the rail 690 is oriented in the third axis. The rail 690 enables components coupled thereto to move along the rail 690 in the third axis direction.

The second guide block 695 is disposed on the rail 690 so that the second guide block 695 and the components coupled thereto can move along the rail 690 in the third axis direction. For movement stability, at least two or more second guide blocks 695 may be disposed on each rail 690, and each second guide block 695 moves along the rail 690 in the third axis direction. Each second guide block 695 is coupled to the third axis moving module 340, more specifically, to a body 704 and a coupling portion 770 to be described later, so that the third axis moving module 340 can also move along the third axis as the second guide block 695 moves.

FIG. 7 is a view illustrating a configuration of the third axis moving module according to an embodiment of the present disclosure.

Referring to FIG. 7, the third axis moving module 340 according to an embodiment of the present disclosure includes a body 704, a mounting seat 708, a first motor 710, a moving unit 720, a second motor 730, a power transmitting element 740, position adjusters 750, coupling elements 760, coupling portions 770, and protrusions 780.

The body 704 provides a space in which components of the third axis moving module 340 are arranged. The body 704 is configured to have a predefined area to allow the components of the third axis moving module 340 to be located at appropriate positions.

The mounting seat 708 is a structure formed in the body 704 and seats and supports one end of the moving unit 720 thereon. The mounting seat 708 on which the one end of the moving unit 720 is seated allows power to be transmitted from the moving unit 720 to the body 704 so that the third axis moving module 340 can move along the third axis.

The first motor 710 generates power to enable the third axis moving module 340 to move along the third axis and transmits the generated power to the moving unit 720. The first motor 710 is coupled to a remaining end of the moving unit 720 through a coupling unit (for example, a belt), and transmits power generated thereby to the moving unit 720. The power generation and transmission of the first motor 710 enables the third axis moving module 340 to move along the rails 690 in the second axis moving module 330 in the third axis direction (via the protrusions 780).

The moving unit 720 receives power generated from the first motor 710 and moves the body 704, and thus the third axis moving module 340, along the third axis.

The moving unit 720 is disposed on the body 704 with the one end of the moving unit 720 coupled to the mounting seat 708 and the remaining end thereof coupled to the first motor 710. The moving unit 720 is disposed on the body 704 in the above-described state and oriented in the third axis direction.

For example, the moving unit 720 is configured with an element, such as a ball screw, that converts a rotational motion into a linear motion, thereby converting the rotational motion transmitted from the first motor 710 into a linear motion. Since the moving unit 720 is oriented in the third axis direction, the transmitted power (rotational force) is converted into power that enables linear movement in the third axis direction. Because the one end of the moving unit 720 is coupled to the mounting seat 708, the converted power is transmitted to the body 704. Accordingly, the body 704 moves along the rails 690 using the transmitted power and may thus move in the third axis direction.

The second motor 730 transmits power to the position adjuster 750 via the power transmitting element 740, thereby enabling the coupling elements 760 to move along the first axis.

The power transmitting element 740 is coupled to the second motor 730 and the position adjusters 750, and transmits rotational force generated by the second motor 730 to the position adjusters 750. The power transmitting element 740 may be configured with a belt or the like, coupled to the components 730 and 750, and may transmit power to the position adjusters 750.

The position adjusters 750 are provided on opposite sides of the second motor 730 with respect to the third axis direction, and are configured to adjust positions of the coupling elements 760 in the first axis direction. The position adjusters 750 are provided on the opposite sides in the third axis direction with the second motor 730 as a center, and are oriented in the first axis direction. Each of the position adjusters 750 may also be configured with a ball screw or the like, and rotates by receiving power transmitted from the power transmitting element 740. The respective position adjusters 750 rotate to adjust a distance between the coupling elements 760 coupled thereto. As will be described later, the coupling elements 760 are connected to the respective cell grippers 350. Since the size of a battery cell to be gripped by the cell grippers 350 may vary depending on types, the respective position adjusters 750 rotate to adjust the distance between the coupling elements 760 coupled thereto, thereby adjusting a distance between the cell grippers 350.

The coupling elements 760 are connected to each of the position adjusters 750 and each of the cell grippers 350, and are configured to move the cell grippers 350 along the first axis. At least two coupling elements 760 are coupled to each position adjuster 750. In order to grip a battery cell at opposite ends, at least two cell grippers 350 are included in the battery cell transport apparatus. To be coupled to the respective cell grippers 350, at least two coupling elements 760 are disposed on and coupled to each position adjuster 750. In addition, since the cell grippers 350 collectively grip a plurality of battery cells, the cell grippers 350 are formed to have a relatively long length in the third axis direction. Accordingly, it may be difficult to couple each cell gripper 350 with only a single coupling element 760, and therefore, the position adjusters 750 are provided on opposite sides in the third axis direction with the second motor 730 as a center, and at least two coupling elements 760 are coupled to each of the position adjusters 750.

Each coupling element 760 is coupled to the corresponding position adjuster 750 through a coupling portion 764 implemented as a ball nut or the like, and is configured to move in one direction along the first axis according to the rotation of the position adjuster 750. The coupling element 760 includes a coupling portion 768 that is coupled to the cell gripper 350 on a side opposite to the side on which the coupling portion 764 is provided. Including the respective coupling portions 764 and 768, the coupling element 760 is connected to the position adjuster 750 and the cell gripper 350, and is configured to move the cell gripper 350 in one direction along the first axis according to the rotation of the position adjuster 750.

The coupling portions 770 are formed in the body 704 to allow the body 704 to be coupled to the second guide blocks 695 in the second axis moving module 330. The coupling portions 770 are provided in the body 704, at positions corresponding to the respective second guide blocks 695 in the second axis moving module 330 (in a state in which the body 704 and the second axis moving module 330 face each other), in the same number as the second guide blocks 695. The second guide block 695 and the coupling portion 770 have a complementary structure that allows the second guide block 695 and the coupling portion 770 to be directly coupled to each other or coupled through other coupling elements (e.g., bolts/nuts or screws). Accordingly, the coupling portions 770 couple the second guide blocks 695 and the body 704. As the second guide blocks 695 and the coupling portion 770 are coupled to each other, the body 704 is able to move along the rails 690 and move in the third axis direction using power generated from the first motor 710 and transmitted by the moving unit 720.

The protrusions 780 are structures protruding vertically downward (in the second axis direction) from the lowermost end of the body 704 to enhance stability of the body 704 coupled to the second guide blocks 695. Each of the protrusions 780 protrudes as described above, but extends lower than a vertical height of the second guide blocks 695, and is positioned between the coupling portions 770 that are coupled to the second guide blocks 695 in one second axis moving module 330. Accordingly, when the second guide blocks 695 and the body 704 are coupled by the coupling portions 770, each protrusion 780 is disposed between the second guide blocks 695 in the corresponding second axis moving module 330. Since the protrusion 780 is a structure protruding from the body 704, the protrusion 780 is disposed between the second guide blocks 695 and may thus enhance stability of the body 704 when the body 704 moves along the second guide blocks 695.

FIGS. 8A to 8C are views illustrating a configuration of the cell gripper according to an embodiment of the present disclosure.

Referring to FIGS. 8A to 8C, the cell gripper 350 according to an embodiment of the present disclosure includes a body 805, a coupling element 810, power supply units 820, connectors 825, cylinders 830, guide blocks 840, rails 850, connection bodies 860, grip bodies 870, adjustment elements 875, and sensor units 880. FIG. 8B is a view illustrating a side surface of the cell gripper 350 (viewed in a -y axis direction), and FIG. 8C is a view specifically illustrating only the sensor unit 880.

The body 805 provides a space in which the components of the cell gripper 350 are provided. The body 805 is formed to have a length in the third axis greater than that in the first axis so that the plurality of connection bodies 860 and grip bodies 870 are arranged therein and a large number of battery cells can be gripped simultaneously.

The coupling element 810 is provided on an uppermost end of the body 805 and is coupled to the coupling element 760 in the third axis moving module 340, more specifically, to the coupling portion 768. Coupled to the coupling portion 768, the coupling element 810 enables the cell gripper 350 to move along the first axis and the third axis by the third axis moving module 340.

The power supply units 820 are respectively disposed on opposite surfaces of the body 805, and supply power to the corresponding cylinders 830 to move the whole cylinders 830. The power supply units 820 are disposed on the opposite surfaces of the body 805 with the body 805 as a center. Each of the power supply units 820 may be implemented with a motor to directly supply power, or may receive pneumatic pressure or the like from an external component and supply power to the corresponding cylinder 830.

The power supply units 820 disposed on the opposite surfaces of the body 805 transmit power in different directions. Accordingly, the cylinders 830 disposed on the opposite surfaces of the body 805 receive power in different directions from the respective power supply units 820 and move in different directions (along the third axis).

Each of the connectors 825 connects the corresponding power supply unit 820 and the associated cylinder 830, and transmits power supplied from the power supply unit 820 to the cylinder 830. As the connector 825 connects the power supply unit 820 and the cylinder 830, the cylinder 830 receives power and is able to move along the third axis.

The cylinders 830 are respectively disposed on the opposite surfaces of the body 805, provide spaces in which the respective connection bodies 860 may be disposed, and move the entire connection bodies 860 disposed therein together with themselves.

The cylinders 830 are respectively disposed on the opposite surfaces of the body 805. The cylinders 830 are disposed on the opposite surfaces of the body 805 and oriented in the third axis direction. In this case, the cylinders 830 are configured to have a length sufficiently long for the connection bodies 860 to be structurally coupled to and disposed on the cylinders 830.

Each of the cylinders 830 receives power transmitted through the corresponding connector 825 and moves along the third axis. Since all of the associated connection bodies 860 are connected to the cylinder 830, the movement of the cylinder 830 causes all the connection bodies 860 to move in the same direction. Here, as described above, because the cylinders 830 respectively disposed on the opposite surfaces of the body 805 move in different directions in the third axis direction, all of the connection bodies 860 connected to the respective cylinders 830 also move in different directions. Thus, the connection bodies 860 connected to the two cylinders 830 move closer to or farther from each other by the cylinders 830 and ultimately are able to grip or place battery cells.

Each of the guide blocks 840 is coupled at a first side thereof to the corresponding rail 850 to move along the rail 850, and at a second side thereof to the associated cylinder 830 to move the cylinder 830 on the rail 850. The guide blocks 840 are respectively disposed on the opposite surfaces of the body 805, and each is coupled to the corresponding rail 850 at the first side thereof and to the associated cylinder 830 at the second side thereof. Although only one guide block 840 may be provided on each of the opposite surfaces of the body 805, a plurality of guide blocks 840 may be provided on each surface of the body 805 to smoothly move the cylinder 830 having a relatively long length. At least one guide block 840 is provided on each surface of the body 805 and is coupled to the corresponding components as described above. Accordingly, when the cylinder 830 is supplied with power, the guide block 840 moves along the rail 850, thereby causing the cylinder 830 to move together with the guide block 840. That is, the guide block 840 moves along the rail 850 according to the power transmitted to the cylinder 830 and moves the cylinder 830.

The rails 850 are respectively provided in the third axis direction on the opposite surfaces of the body 805 to move the guide blocks 840 and the cylinders 830 coupled thereto in the third axis direction. Each of the rails 850 is provided in the third axis direction on a corresponding one of the opposite surfaces of the body 805. In the same manner as the guide block 840, a plurality of rails 850 may be provided on each of the opposite surfaces of the body 805 to smoothly move the corresponding cylinder 830. That is, at least one rail 850 is provided on each surface of the body 805, and the rail 850 and the guide block 840 are implemented in the same number. As the rail 850 is provided in the third axis direction, the corresponding guide block 840 and the associated cylinder 830 coupled thereto may move in the third axis direction.

Each of the connection bodies 860 is coupled at a first side thereof to the corresponding cylinder 830 and at a second side thereof to the associated grip body 870, thereby moving the grip body 870 together with movement of the cylinder 830. A plurality of connection bodies 860 are provided corresponding to the number of battery cells to be gripped, and each connection body 860 is coupled at the first side thereof to the corresponding cylinder 830. The connection body 860 is coupled at the first side thereof to the cylinder 830 and is configured to extend downward in the second axis direction (vertically downward) so that the grip bodies 870 may grip battery cells. Accordingly, the grip bodies 870 coupled to the connection bodies 860 are able to grip battery cells.

Each of the grip bodies 870 is coupled at a first side thereof to the corresponding connection body 860 and grips a battery cell together with a counterpart grip body 870 located on an opposite side of the body on which grip body 870 is provided. A plurality of grip bodies 870 are also provided corresponding to the number of battery cells to be gripped, and each are coupled to the second side of the corresponding connection body 860. A side surface of the grip body 870 opposite to the side coupled to the connection body 860 is formed to be planar so as to stably grip the battery cell and prevent damage to the gripped battery cell. Since the opposite side surface of the grip body 870 is formed to be planar, the opposite side surfaces of the pair of grip bodies 870 are able to stably grip the battery cell and maintain the gripped state.

The adjustment elements 875 are provided in the respective connection bodies 860 such that each adjustment element 875 faces an adjacent connection body 860, thus adjusting fine spacing deviations between the adjacent connection bodies 860. Each of the adjustment elements 875 is implemented as an elastic element such as a spring. Even though the connection bodies 860 are precisely manufactured and arranged in each cylinder 830, it is unlikely that the spacing between all of the connection bodies 860 disposed in each cylinder 830 is exactly the same. If fine spacing deviations occur between the adjacent connection bodies 860 for all of the connection bodies 860, there is a possibility that all of the battery cells may not be uniformly gripped. To resolve the foregoing problem, the adjustment elements 875 are provided at the aforementioned positions to compensate for such spacing deviations between the adjacent connection bodies 860.

Each of the sensor units 880 senses whether an impact is applied to the battery cells during a gripping process or a placing process. Each sensor unit 880 includes sensor bodies 881a and 881b, a hinge structure 883, a sensor 885, and a shock absorber 887. Furthermore, the sensor units 880 may further include a light source 889 and a light receiving sensor 889.

The sensor body 881a is coupled to the body 805 to support the remaining components of the sensor unit 880. The sensor body 881a is coupled to the body 805, particularly to a lowermost end of each of the opposite ends of the body 805. Since the sensor unit 880 needs to sense whether an impact is applied to the battery cells during the gripping process or the placing process, the sensor body 881a is coupled to the lowermost end of each of the opposite ends of the body 805.

The sensor body 881b is coupled to the sensor body 881a by the hinge structure 883 and provides a space in which components other than the sensor bodies 881a and 881b in the sensor unit 880 may be provided. The sensor body 881b has a structure protruding downward in the second axis direction (vertically downward) at an end thereof opposite to the portion coupled to the sensor body 881a.

The hinge structure 883 couples the sensor bodies 881a and 881b to allow the sensor body 881b to rotate so as to adjust an angle between the sensor bodies 881a and 881b. The hinge structure 883 couples the sensor bodies 881a and 881b to each other to prevent the sensor body 881b from being removed, and allows the angle between the sensor bodies 881a and 881b to be adjusted.

However, the disclosure is not limited thereto, and the pair of sensor bodies 881a and 881b may also be integrated as a single body having the same form as the structure in which the sensor bodies 881a and 881b are coupled by the hinge structure 883.

The sensor 885 detects an impact or vibration transmitted from the sensor body 881b. The sensor 885 is disposed at a position in the sensor body 881b to detect an impact or vibration generated when the sensor body 881b collides with other components. By detecting the aforementioned information, the sensor 885 senses whether an impact has been applied to the battery cells during the gripping process or the placing process.

The shock absorber 887 is disposed adjacent to the sensor 885 to buffer vibrations applied to the sensor 885. In the case where an impact or vibration is fully transmitted from the sensor body 881b to the sensor 885, the sensor 885 may be damaged or may deviate from its own position. The shock absorber 887 is disposed adjacent to the sensor 885 to prevent such problems.

In some cases, the sensor units 880 may further include the light receiving sensor 889 and the light source 889 instead of or together with the sensor 885. As described above, the sensor unit 880 is coupled to the lowermost end of each of the opposite ends of the body 805. Accordingly, in the sensor unit 880 at one side, the light receiving sensor 889 configured to receive incident light may be disposed at the lowermost end (protruding downward along the second axis (vertically downward)) of the sensor body 881b. In the sensor unit 880 at the other side, the light source 889 may be disposed at the lowermost end (protruding downward along the second axis (vertically downward)) of the sensor body 881b. The lowermost end of the sensor body 881b protruding downward along the second axis is positioned above (in the second axis direction) relative to a height at which the battery cells are located when the battery cells are fully gripped. The light receiving sensor 889 and the light source 889 are positioned at the corresponding height, and the light source 889 emits light toward the light receiving sensor 889. When the battery cells are normally gripped, the light emitted from the light source 889 proceeds toward the light receiving sensor 889. However, when a battery cell collides with another component, the battery cell is raised due to the collision, thereby blocking the light emitted from the light source 889 from proceeding to the light receiving sensor 889. That is, the sensor units 880 include the light receiving sensor 889 and the light source 889, and whether a battery cell has received an external impact (and thus has been displaced) may be determined based on whether light is incident on the light receiving sensor 889.

FIG. 9 is a view illustrating a configuration of the drop prevention cover module according to an embodiment of the present disclosure.

Referring to FIG. 9, the drop prevention cover module 360 according to an embodiment of the present disclosure includes a body 905, a motor 910, a power transmitting element 920, a coupling portion 930, a rail 940, a guide block 950, a drop prevention cover 960, and a connector 970.

The body 905 provides a space in which the motor 910, the power transmitting element 920, the coupling portion 930, the rail 940, and the guide block 950 are provided. The body 905 is formed in an elongated shape in the third axis direction to allow the power transmitting element 920 and the rail 940 to be disposed. The body 905 is formed to be longer than at least the power transmitting element 920 or the rail 940 with regard to the third axis direction, thereby providing a space in which the power transmitting element 920 and the rail 940 are disposed.

The motor 910 supplies power to the drop prevention cover 960 through the coupling portion 930, the guide block 950, and the connector 970 so that the drop prevention cover 960 can reciprocate along the third axis. Supplying the power, the motor 910 allows the drop prevention cover 960 to move along the third axis. For example, when one drop prevention cover 960 moves away from lower ends of the battery cells or both drop prevention covers 960 move away from each other, the cell grippers 350 may grip or place the battery cells. On the other hand, when one drop prevention cover 960 moves toward the lower ends of the battery cells or both drop prevention covers 960 move closer to each other, the drop prevention covers 960 are positioned at the lower ends of the battery cells to prevent the battery cells from falling outside the housing 110.

The power transmitting element 920 is disposed in the third axis direction, receives power from the motor 910, rotates, and moves the coupling portion 930 coupled thereto along the third axis. The power transmitting element 920 is configured with a rotatable element such as a ball screw and rotates using the power received from the motor 910. The power transmitting element 920 rotates and moves the coupling portion 930 coupled thereto along the third axis.

The coupling portion 930 is coupled, at a portion or one side thereof, to the power transmitting element 920 and, at another side thereof, to the corresponding connector 970, and moves along the third axis according to rotation of the power transmitting element 920. The coupling portion 930 includes a structure in which, at a portion or one side thereof, a ball nut or the like is structurally coupled to the power transmitting element 920 so as to move according to rotation of the power transmitting element 920. When the power transmitting element 920 rotates, the coupling portion 930 using the aforementioned structure moves along the third axis in a direction depending on a rotational direction of the power transmitting element 920. The coupling portion 930 is coupled, at another side thereof, to the connector 970 and moves the coupled connector 970 together with the coupling portion 930 along the third axis.

The rail 940 is disposed on the body 905 along the third axis to allow the guide block 950 to move in the third axis direction along the rail 940. As the rail 940 allows the guide block 950 to move along the rail 940 in the third axis direction, the connector 970 coupled to the coupling portion 930 may more smoothly move along the third axis.

The guide block 950 is coupled, at one surface thereof, to the rail 940 and, at another surface thereof, to the connector 970, and configured to move on the rail 940 to assist movement of the connector 970 coupled thereto. When the connector 970 moves along the third axis relying only on movement of the coupling portion 930 according to rotation of the power transmitting element 920, the connector 970 may not move smoothly. Accordingly, the guide block 950 is coupled to the rail 940 disposed on the body 905 along the third axis, and the guide block 950 moves on the rail 940 to assist movement of the connector 970.

The drop prevention cover 960 is connected to the connector 970, moves along the third axis, and prevents the battery cell from falling outside the housing 110. The drop prevention cover 960 alleviates, as much as possible, an impact applied to the battery cell dropping thereon, and is formed to be planar so that the dropped battery cell can be prevented from being removed outside the drop prevention cover 960. The drop prevention cover 960 is required to be formed of a material that has an uneven surface (not low friction) and can absorb an impact to a certain degree. Furthermore, in order to easily discern, from the outside, whether a battery cell that has fallen is present, it is preferable that the drop prevention cover 960 be formed of a transparent material. Accordingly, the drop prevention cover 960 may be formed, for example, of an acrylic material.

The drop prevention cover 960 is connected to the connector 970 and moves together along the third axis according to movement of the connector 970. The drop prevention cover 960 moves beneath the battery cells gripped by the cell grippers 350 according to movement of the connector 970, or moves away from the battery cells so as to allow the cell grippers 350 to grip or place the battery cells.

The connector 970 is connected, at a first side thereof, to the coupling portion 930 and the guide block 950, and, at a second side thereof, to the drop prevention cover 960, and moves the drop prevention cover 960 connected thereto according to movement of the coupling portion 930 and the guide block 950. Since the connector 970 is connected, at the first side thereof, to the coupling portion 930 and the guide block 950, the connector 970 moves along the third axis according to movement of the coupling portion 930. In addition, because the connector 970 is also connected to the guide block 950, the connector 970 may move more smoothly along the third axis. The connector 970 moves along the third axis and moves the drop prevention cover 960 connected to the second side thereof together with the connector 970.

In an embodiment, the motor 910, the power transmitting element 920, the coupling portion 930, the guide block 950, and the connector 970 are provided in the same number as the drop prevention covers 960. For example, when two drop prevention covers 960 are provided, the motor 910, the power transmitting element 920, the coupling portion 930, the guide block 950, and the connector 970 are also provided in two. In this case, each motor 910 and each power transmitting element 920 are appropriately disposed so that the coupling portions 930 and other associated components move in different directions, thereby allowing the drop prevention covers 960 to move closer to each other or move away from each other. Unlike as illustrated in FIG. 9, when the drop prevention cover 960 is implemented as one, the drop prevention cover 960 needs to be formed large enough to cover an entire length of the battery cell in the third axis direction, and one motor 910, one power transmitting element 920, one coupling portion 930, one guide block 950, and one connector 970 are respectively provided to move the drop prevention cover 960.

As described above, according to an aspect of the present embodiment, there is an advantage of minimizing damage to components that may occur during transport of battery cells, regardless of the number of transports or the transport distance of the battery cells.

The above description is merely an illustrative description of the technical spirit of the present disclosure, and those skilled in the art may change and modify the present disclosure in various ways without departing from the essential characteristic of the present disclosure. Accordingly, the embodiments described in the present disclosure should not be construed as limiting the technical spirit of the present disclosure, but should be construed as describing the technical spirit of the present disclosure. The technical spirit of the present disclosure is not restricted by the embodiments. The range of protection of the present disclosure should be construed based on the following claims, and all of technical spirits within an equivalent range to the claims should be construed as being included in the scope of rights of the present disclosure.

## Claims

1. A battery cell transport system comprising:
a battery cell transport apparatus configured to transport a battery cell from a configuration to another configuration; and
a housing configured to support the battery cell transport apparatus and allow the battery cell transport apparatus to move along the housing,
wherein the housing comprises:
main frames configured to form a framework of the housing and provide a space in which configurations in the housing are provided;
reinforcement frames disposed between the respective adjacent main frames and configured to disperse a force applied to the main frames; and
a main rail seated on the reinforcement frames in a first axis direction perpendicular to a vertical direction, and configured to allow the battery cell transport apparatus to move along the main rail.

2. The battery cell transport system according to claim 1, wherein the battery cell transport apparatus moves along the housing in the first axis direction by moving along the main rail using a wheel.

3. The battery cell transport system according to claim 1, wherein the main frames are disposed along the first axis direction and a second axis direction corresponding to the vertical direction, and form an outer framework.

4. The battery cell transport system according to claim 1, wherein each of the main frames is formed of an aluminum profile.

5. The battery cell transport system according to claim 4, wherein each of the main frames has a cross-sectional size of 80 mm x 120 mm in terms of width and height with a tolerance of 10 mm.

6. The battery cell transport system according to claim 1, wherein the reinforcement frames are disposed between the respective adjacent main frames in a third axis direction perpendicular to the vertical direction.

7. The battery cell transport system according to claim 1, wherein each of the reinforcement frames is formed of an aluminum profile.

8. The battery cell transport system according to claim 1, further comprising support frames connecting the main frames, and the reinforcement frames on which the main rail is seated, the support frames being configured to disperse a weight applied to the reinforcement frames.

9. The battery cell transport system according to claim 8, wherein the support frames connect the main frames and the reinforcement frames in a diagonal form.

10. The battery cell transport system according to claim 1, wherein the main rail has a planar cross section having at least four sides at an outer periphery thereof.
